# EUROPEAN PATENT SPECIFICATION

(11) **EP 2 900 459 B1**
(45) Date of publication and mention of the grant of the patent: **31.08.2022**
(21) Application number: 13786617.4
(22) Date of filing: 25.09.2013
(51) Int. Cl.: B29C 73/02, B32B 17/10

(54) **APPLIANCE FOR REPAIRS OF LOCAL DAMAGE OF LAMINATED GLASSES, PARTICULARLY GLASSES OF CARS AND OTHER TRANSPORTATION MEANS**
VORRICHTUNG ZUM REPARIEREN VON LOKALEN BESCHÄDIGUNGEN VON VERBUNDGLAS, INSBESONDERE GLASSCHEIBEN VON PERSONENKRAFTWAGEN UND ANDEREN TRANSPORTMITTELN
APPAREIL DE RÉPARATION D'AVARIES LOCALES DE VITRES DE VERRE FEUILLETÉ, EN PARTICULIER DE VITRES DE VOITURE ET AUTRES MOYENS DE TRANSPORT

(30) Priority: 26.09.2012 CZ 201200662 U; 02.07.2013 CZ 201328155 U
(43) Date of publication of application: 05.08.2015
(73) Proprietor: Hauser, Vladìmír, 370 10 Ceské Budejovice (CZ)
(72) Inventor: Hauser, Vladìmír, 370 10 Ceské Budejovice (CZ)
(74) Representative: Sedlák, Jirí
(86) International application number: PCT/CZ2013/000115
(87) International publication number: WO 2014/048405

(56) References cited:
- WO-A1-97/39879
- US-A- 4 032 272
- US-A- 4 776 780
- US-A- 4 820 148
- US-B1- 6 589 036

## Description

### Field of the invention

The invention relates to the appliance for repairs of local damage of laminated glasses of sandwich structure, consisting of two glass layers with intermediate layer made of plastic foil (hereinafter "glass"), particularly glasses of cars and other transportation means, generally using a glue applied in the point of damage. Term "damage" as used herein could particularly include local chipping of glass surface, caused most often by chipping off stones and other defects developing in the point of chip damage. Term "glue" as used herein could include resin or other repair materials, liquid or viscous and suitable for repair of glass damage.

### Background of the invention

Damage of glasses on the transportation means, particularly front glasses of cars, usually occurs due to hitting of a small stone or similar small and hard thing to glass surface. In the point of collision, a part of the glass surface is chipped off and the damage may be of different depth and width. Very often, the damage shape is conical in which other radial cracks originate. Replacement of the glass is expensive and therefore, a wide range of methods and appliances for repairs of damaged windscreens of cars in situ without necessity of replacing of the windscreen glass.

The patent document US 3 841 932 describes the method and appliance for repair of local conical damage where the glass is heated in the point of damage by a lamp and semi-circular plastic container is stuck to the point of damage with repair liquid, particularly polymerizable glue or resin. After running of the liquid to the point of damage, the chipped off glass is filled in and the repair point is then hardened. A disadvantage of this method and appliance is that the repair liquid does not run reliably to full crack area including potential radial cracks.

Another patent document US 4 385 015 describes an appliance for repair of resisting glasses such as windscreens of cars. The appliance consists of two parts: a shell under which underpressure is generated and a cylinder fixed in the centre of the shell above glass damage. There is a hole in the cylinder side to expand underpressure to the point of repair and there is a piston above the compartment. Prior to introduction of underpressure, repair liquid is poured to the damage point. Underpressure acts to remove air bubbles from the repair liquid and the piston is then pressed. By pushing the piston on the liquid only after hole in the cylinder wall, the liquid is forced to fill in the compartment in the crack where it would not run spontaneously. Disadvantage of the invention is that by introducing of underpressure after application of the repair liquid, moisture is not removed from the point of damage and releasing gas produces new bubbles in the liquid.

Possibility for fixing to glass using underpressure throughout the period time has been mentioned in the patent document US 4 776 780. This is an appliance with a diaphragm in its lower pedestal and the diaphragm is specially shaped so that it creates several separated spaces. Underpressure is achieved to fix the appliance to the glass in created in the peripheral inner compartment along the diaphragm circumference. This attachment to the glass is then fixed by an element to capture underpressure in the compartment. Another compartment is created under the diaphragm above the point of repair. Underpressure does not act in this compartment but the one is connected to the piston under which glue is poured and pushed into the glass break point. A disadvantage is that the glass break point is not free of all air, resisting to the glue and therefore, the glue runs to the glass break point with difficulties.

Improved solution of previous methods and appliances for repair of glass damage is the subject of the patented document US 6589036. The patent describes an appliance consisting of a plastic body to which sealing collar on external circumference of a lid is attached using a matrix. The plastic body has a borehole for piston and borehole for installation of closed capsule with repair liquid (glue). The lid is fitted with a seal that divides the compartment under the sealing collar into the repair compartment above the break point and fixing compartment. The device is attached above the break point and fixed to the glass by partial underpressure from air pump in the fixing compartment around the repair compartment that is has shape of sealed circle ring. This partial underpressure is then released by disc valve to the separated repair compartment as well. The disc valve is then closed and increased underpressure by ejecting the piston is created in the repair compartment. After unlocking, the glue capsules are broken and the glue flows to the break point due to increased underpressure. Then, the underpressure is balanced and using the piston, pressure is developed on the glue in the repair point to allow running of the glue to all cracks and corners of the break point. A disadvantage of this solution is that partial even increased underpressure and pressure developed over the glue acts on the disc valve in the opening direction and thereby, glue leaks through the disc valve and pressure drops around the repair point. The glue is to a certain extent evacuated inside the appliance and air bubbles are present in the glue. The appliance gets dirty, must be cleaned and the repaired point shows optically undesirable defects in the form of microscopic bubbles. It is also disadvantageous when the glue is dosed by capsules of which volume is not always corresponding to the extent of glass damage. Design of the appliance is complex and its disadvantages are based mainly on the fact it contains the first means for normal pressure as well as second means for increased underpressure and during pressure changes, the glue and pressure leaks occur.

The patent document US 6 485 281 which discloses an apparatus according to the preamble of claim 1 describes an appliance for glass repair, consisting of a piston with a nozzle, from which the glue is pressed into the crack and at the same time, the nozzle is placed in an adapter that produces underpressure around the nozzle orifice. This ensures that no air blocks the glue flow during repair. A disadvantage of this solution is that during repair the glue is partially removed by pressure, makes tubes to the vacuum pump clogged and glue consumption increases.

The British patent document GB 2 469 527 presents an appliance mounted on a holder fixed on glass. The appliance consists of a piston with glue bin attached through the wall. The piston is lifted up and underpressure is generated. The glue is left flowing to the point of destination and then, the piston produces pressure to push the glue to the break point. A disadvantage of this solution is that the pressure generated is limited by the piston volume. When the piston is lifted up again, the glue would be removed from the break point.

The purpose of this invention is to produce an appliance, which would eliminate the drawbacks of existing solutions, particularly according to US 6589036 patent. Design of the appliance must be to avoid flowing of glue inside the appliance and reducing underpressure/pressure during repair. Another purpose of the invention is simplified handling of the appliance, particularly as far as the glue application is concerned. In addition, the appliance should be universally applicable for different glue types, i.e. not limited to certain shape or size of capsules or glue types available on the market in these capsules only.

### Summary of the invention

The goal specified is resolved by designing a device according to present invention.

The appliance for repair of local glass damage, particularly windscreens of cars and other transportation means, consists of a known body with a base fitted with circumferential elastomer seal that specifies the fixing compartment and which can be fixed on glass using underpressure from air pump brought to the fixing compartment. In the base area, there is a seal for the repair compartment that separates the repair compartment located above the glass damage point from the fixing compartment. The repair compartment is connected with a channel inside the glue supply body to the repair compartment. In addition, the appliance includes a general valve device for underpressure supply to the repair compartment and swivelling adjustable piston located in the cylinder borehole in the body to control individual work positions of the appliance and production of pressure in the repair compartment.

The substance of the invention is that the body base has a recess in which a lid with sealing of the repair compartment is placed in a removable way and the lid has a borehole for underpressure supply to the repair compartment. The valve device consists of overflow valve installed in the body and terminated to the recess. The overflow valve is fitted with a control arranged inside the body and connects the lid borehole with a connector for air pump connection. Said connection is guided outside the borehole compartment of swivelling adjustable piston. Another feature of the invention, which is important for keeping of constant pressure/underpressure, is a closing member of the overflow valve arranged so that it moves in the underpressure suction direction from the repair compartment to the terminal for the air pump connection when closing the overflow valve. The fixing compartment is linked to the terminal for the air pump connection using the borehole created separately in the lid and connects the fixing compartment with the channel for underpressure channel to the fixing compartment, guided in the body outside the overflow valve to the air pump connector and in addition, the appliance contains a device for air supply to the borehole compartment under the piston. The main benefit of the appliance according to present invention is that the underpressure compartment for fixing of the appliance is separated from the underpressure compartment for the damage repair and that the underpressure does not reduce during repair due to overflow valve leak. This is pushed in closing direction and keeps constant underpressure value. Placing of the removable lid in the recess and independent underpressure connection between the repair compartment and fixing compartment through said lid allows demountable design of the appliance, i.e. including assembly and disassembly of the overflow valve. The air supply device to the borehole compartment under the piston allows removal of underpressure acting in the repair compartment in certain phase of the repair process, which would remove the glue from glass damage cracks, whereas the underpressure in the fixing compartment remains retained.

In one favourable embodiment of the appliance according to this invention, said borehole for underpressure supply is further connected with the channel for pressure supply to the repair compartment, created in the body between the recess front and cylindrical borehole for swivelling adjustable piston. The solution of single borehole used both for underpressure supply as well as for pressure supply to the repair compartment is beneficial both in saving of space because the repair compartment is usually very small. Another benefit is that underpressure may not be present at the same time when pressure operates in the same borehole, i.e. the glue may not be removed from the repair compartment.

Another favourable embodiment of the appliance according to the invention, there is a flat gasket with a hole in the recess between the lid and the base front to supply underpressure to the repair compartment, arranged under termination of the overflow valve into the recess and fitted with shape groove running over the borehole orifice for underpressure/pressure supply in the lid and under the channel orifice for the pressure supply in the recess front. The flat gasket seals the space between the lid, recess and the overflow valve and underpressure from the overflow valve to the repair compartment is supplied through it. Through shape groove in the flat gasket, pressure from swivelling adjustable piston is supplied to the repair compartment.

As far as design of the flat gasket is concerned, its favourable embodiment is when the flat gasket has a hole for underpressure supply to the fixing compartment that connects the borehole in the lid with the channel for underpressure supply to the fixing compartment.

It is also favourable that the lid has borehole for glue supply to the repair compartment and the flat gasket has hole for glue supply that connects the borehole with the channel in the body. All distribution channels, boreholes and holes used for underpressure, pressure and glue supply are technologically concentrated into the lid area and sealed with a single flat gasket, which is favourable both with respect to reducing the number of components and improving reliability, reduction of production price and achieving of minimum service.

With respect to the lid design, the favourable embodiment is when the borehole for glue supply in the lid and the borehole for underpressure/pressure supply to the repair compartment in the lid are arranged in opposite areas of the lid outside the projection of the overflow valve, whereas the hole for underpressure supply in the flat gasket is arranged in the area of projection of the overflow valve. Said spatial arrangement uses the repair compartment best for removing of gas from the compartment and uniform flowing of the glue to the compartment without sucking the glue to a larger extent by present underpressure to the borehole for underpressure/pressure supply.

Another favourable embodiment of the appliance according to this invention, the cylindrical borehole for swivelling adjustable piston is connected in the lower part with a device for air supply to the borehole space under the piston, as a one-way suction valve installed in the body for air suction under the piston front. This embodiment allows suction of sufficient air volume under the piston when lifting the piston in order to get required air pressure when pressing on the piston to the repair compartment, acting on flowing of the glue to the break point. Suction and compressing of air can be repeated by multiple lifting and pressing of the piston until value required is reached. In order to keep the pressure constant and to avoid pressure drop, the cylindrical borehole is fitted in its lower section with a seat into which the seat on the piston front matches, whereas the piston is fitted with a piston sealing ring in the area above the seat and the piston front seat sealing ring in the seating area and between the sealing rings there is termination of the supply channel for air supply from one-way suction valve.

It is also favourable when the channel for pressure supply to the repair compartment is terminated on the bottom of the cylindrical borehole seat and is performed in the piston axis, which simplifies production and optimizes pressure conditions.

Another favourable embodiment of the appliance according to this invention is that the recess front has a notch forming the seat of the overflow valve in which a closing element of the overflow valve is arranged in a moving way. Stem of the overflow valve connected with the closing member has moving connection in the borehole for the overflow valve created in the body. End of the stem is connected with the control of the overflow valve that is arranged outside the body and connected with the component for external control.

Detailed construction of the overflow valve is favourably designed so that in the end of the stem, there is the pushing closure with a gasket, installed in a demountable way and located on the spring in the expanded upper section of the borehole for the overflow valve. The expanded upper part of the borehole is connected using the connection channel with the air pump connector and the pushing closure is arranged for connection with the control of the overflow valve; said embodiment is favourable because the pushing spring ensures common closing of the overflow valve, i.e. fitting of the closing member against the seat using pull generated on the stem. When the overflow valve is opened, the control pushes the pushing closure, the stem with closing member moves vertically downwards through the spring pressure, the overflow valve opens and gas from the repair compartment is removed.

It is favourable when the control of the overflow valve consists of a flange fitted on the swivelling adjustable piston outside the body so that opening and closing of the overflow valve can be controlled by rotating the swivelling adjustable piston including the flange that causes opening/closing of the overflow valve at certain angle.

The favourable construction embodiment of the flange forming the control of the overflow valve, where the flange is of round shape, its lower side fitting against the pushing closure is fitted with at least one pressing projection and the pushing closure is fitted with corresponding shape recess on its upper side for matching of the pressing projection. In this embodiment, the overflow valve is pressed, i.e. open in one position of the swivelling adjustable piston only, where the pressing projection of the flange matches with the shape recess of the pushing closure. The overflow valve is closed in all other operation positions of the swivelling adjustable piston.

In another embodiment of the appliance according to this invention it is favourable when the body base, recess, lid and flat gasket have round shape and are arranged coaxially each other. The overflow valve axis is identical to their central axis and the axis of the swivelling adjustable piston is parallel to the axis of overflow valve. The described embodiment is favourable with respect to easy production, body and lid machining as well as with respect to easy assembly, disassembly and failure-free operation.

In the favourable embodiment of the swivelling adjustable piston, said piston is fitted with an interlock groove to which a guiding pin fixed to the body and protruding to the cylindrical borehole fits. The interlock groove consists of round circumferential groove for swivelling positioning and of vertical guiding groove for vertical movement of the swivelling adjustable piston in the cylindrical borehole.

For simple and precise swivelling of the piston into individual work positions, it is favourable when the swivelling adjustable piston is fitted with a positioning head in the upper part, where the head is placed in the expanded part of the borehole and with arresting pits along its circumference. Angular position of the arresting pits corresponds to individual angular work positions of the swivelling adjustable piston, whereas the arresting pin protruding to the cylindrical borehole engages to the arrestment pits.

In favourable construction embodiment, the flange is fitted onto the piston outside the body above the positioning head and fitted with marks corresponding to individual work positions of the swivelling adjustable piston, whereas at least one indicator in opposite direction to the marks is shown on the body.

In another favourable embodiment of the appliance according to this invention, the body has a bin for loose liquid viscous glue, whereas the channel orifice for glue supply to the repair compartment protrudes to the bin above the level created by the glue volume required for repair of damage. The appliance of this embodiment allows working with any type of loose liquid glue or resin and not only with glue distributed in closed shaped capsules.

In order to transport the glue at right time from the bin to the repair compartment, the favourable embodiment of the appliance is designed so that the bin forms a lower part of the borehole in the body, whereas the upper part of the borehole has the valve stem for the glue supply with vertical, swivelling and shifting movement possible. The valve stem is connected with the valve head arranged outside the body with its possible arrestment in the upper and lower position. In addition, the stem is fitted with gasket and groove for overflowing of the glue from the bin to the channel when the valve is in the lower position.

The glue supply valve is used for squeezing the glue from the bin through the groove for overflowing of the glue to the channel in the body for glue supply up to the repair space as soon as the glue fits into the bin where it is moved by pressure created in the repair compartment.

In the favourable embodiment of the glue supply valve, the valve head is fitted with arresting stop block to fit against the arrestment body projection in the upper position and the arresting safety pin matching with the recess for the arresting safety pin in the lower position. The arresting stop block prevents to premature engagement of the valve into the borehole - it must be released manually and let the valve engage in the bin and squeeze the glue. On the contrary, the arresting safety pin is used to keep the valve blocked in the lower position when pressure is brought to the repair compartment. The glue supply valve may not be pushed away by pressure from the borehole and is sealed using the gasket, therefore no pressure drop occurs when pressurizing the repair compartment.

Finally, it is favourable when the external circumference of the lid and inner circumference of the base are fitted with opposite circumferential semi-grooves that jointly form a distribution channel for underpressure distribution in the fixing compartment, which improves the effect of fixing on glass.

In another favourable embodiment which is not part of the invention in which the suction valve was removed, the advantages of the invention lie in the fact that the seating diameter of the head of the swivelling adjustable piston and of the borehole in the area where the piston head is mounted is smaller than the diameter of the upper seating of the swivelling adjustable piston and of the borehole at the site of the upper seating, while at the same time the swivelling adjustable piston at the seating of the piston head is fitted with at least one seal for sealing it in the lowest working position in the borehole with a seating diameter of the piston head, while in the highest working position of the swivelling adjustable piston the seating of the piston head with seal is arranged with clearance in the borehole with the diameter of the upper seating, and also the swivelling adjustable piston is fitted with a control means for controlling the valve device arranged inside the body of the appliance. This results in the absence of a suction valve in the construction of the device and a reduction in the manufacturing cost of the device. The amount of trapped air in the lower area of the borehole is also smaller, so the developed pressure on the flowing glue is lower in comparison to the current design.

In another favourable embodiment which is not part of the invention, the interlock groove connection shape corresponds to the continuous individual working positions of the swivelling adjustable piston. The groove prevents any accidental or intentional rotation of the adjustable piston during the particular technological step of the repair process, so no locking means, which would make the production of the device more difficult, are necessary.

In another favourable embodiment which is not part of the invention, the control means for controlling the valve device consists of a positioning head formed on the swivelling adjustable piston at a point above the upper seating, the diameter of which is larger than the diameter of the upper seating, and which is provided with a piston handle. The adjustable head is an integral part of the piston and acts directly on the valve device directly, so that the device is structurally simpler and is more resistant to damage.

In another further favourable embodiment which is not part of the invention, the difference in diameter of the adjustable head and the diameter of the upper seating creates an overlap which is provided with a recess for controlling the valve device by compressing or releasing in the borehole. In the rotational position of the adjustable piston corresponding to the technological step of creating a vacuum over the damaged glass, the valve device opens by pressing into the borehole and the vacuum can extend into the isolated area.

In another favourable embodiment which is not part of the invention, the piston handle is adapted to indicate the current working position of the swivelling adjustable piston. The handle itself serves as an indicator of the current technological step, so the equipment need not be provided with an additional indicator.

In another favourable embodiment which is not part of the invention, the housing on the top side is fitted with a cover with a hole for the positioning head. The cover prevents dirt from entering the device, while the cover must be provided with a hole for the positioning head when the piston is pulled out of the body of the device.

In another favourable embodiment which is not part of the invention, the cover bears marks that provide information on the current working position of the swivelling adjustable piston. Although the interlocking groove does not allow the piston to be rotated into more positions at one time, the operator still needs to be have available information concerning which technological step the device is currently in.

In another favourable embodiment which is not part of the invention, the borehole for the glue supply valve for repairing damaged glass has a flat bottom. Varying shapes on the bottom when inserting the discharge pin resulted in stuck glue; experiments verified that a flat bottom achieves the best results in terms of discharging the entire content of glue.

In another favourable embodiment which is not part of the invention, the passageway for passage of the glue leads arranged at the bottom of the borehole for the glue supply valve. Extruded glue immediately leaves the borehole when inserting the glue supply valve, so no glue remains between the borehole and the valve.

The advantages of the appliance according to present invention are mainly that due to the structure of the overflow valve and other components and due to separation of the underpressure repair compartment and fixing compartment, keeping of constant underpressure or pressure in relevant phases of the repair procedure is achieved. Because no underpressure drops, it is not necessary to employ a work phase where increased underpressure is applied. The appliance fully avoids suction of the glue from the repair compartment to other compartments of the appliance and therefore, the appliance is not clogged by glue and the glue is applied only to the repair compartment. The advantages also include simplified handling during application of the glue. The appliance according to the invention is universally applicable for any type of viscous glue suitable for glass repair, without limitations to glues filled in capsules intended for perforating inside the appliance only. In addition, the appliance is characterized by easy production, low production costs, easy assembly and disassembly and failure-free operation.

### Description of the drawings

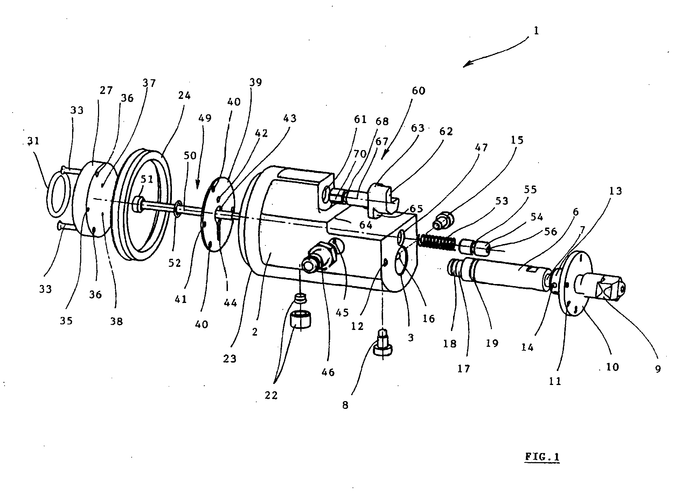

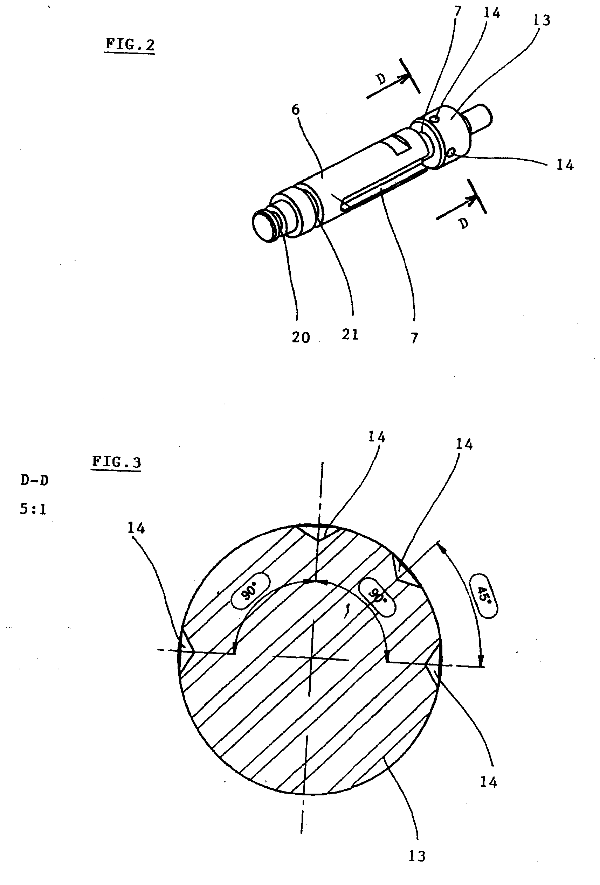

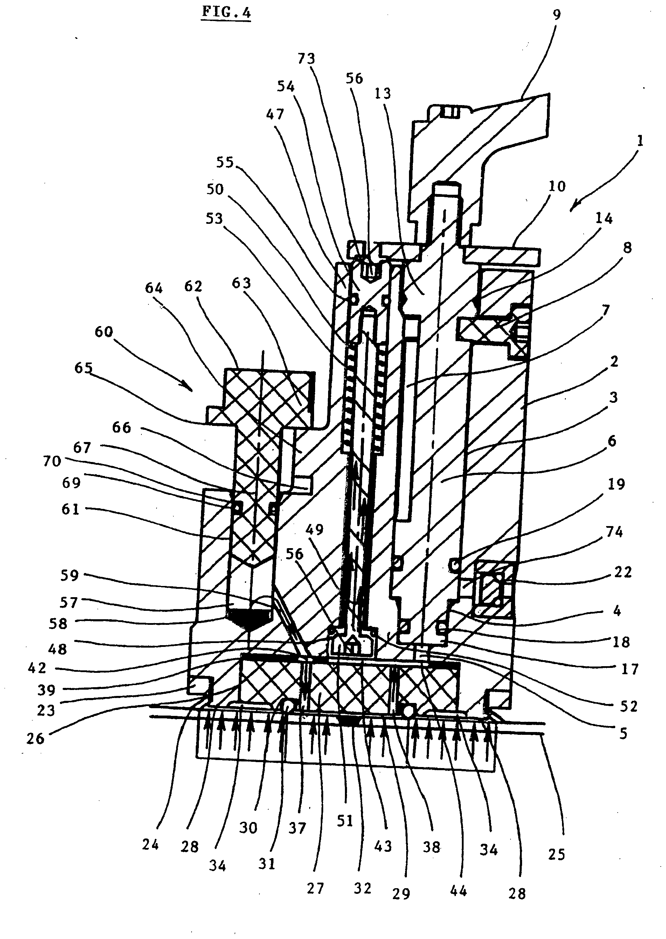

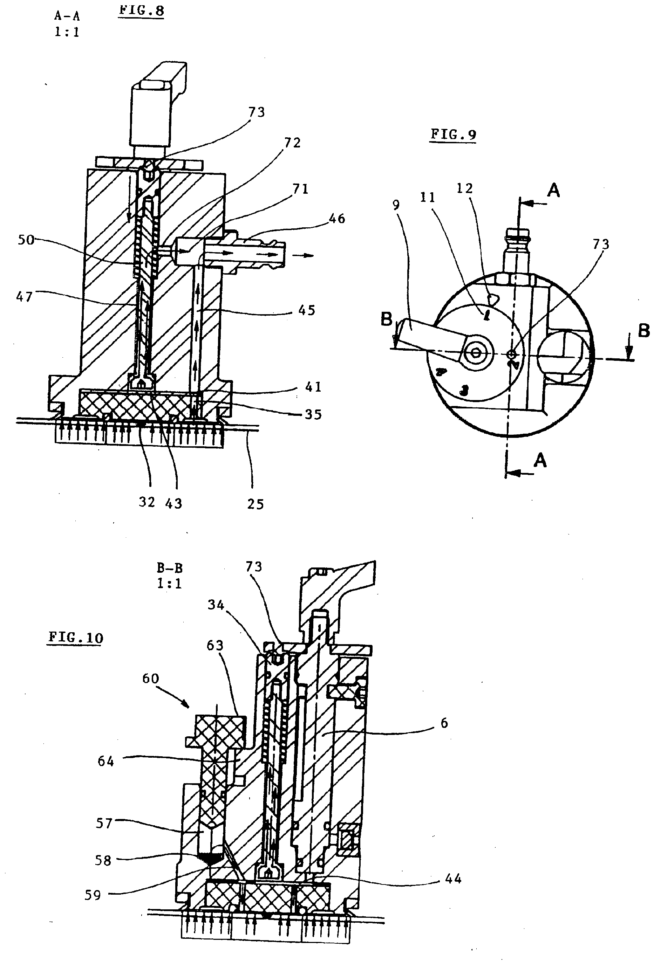

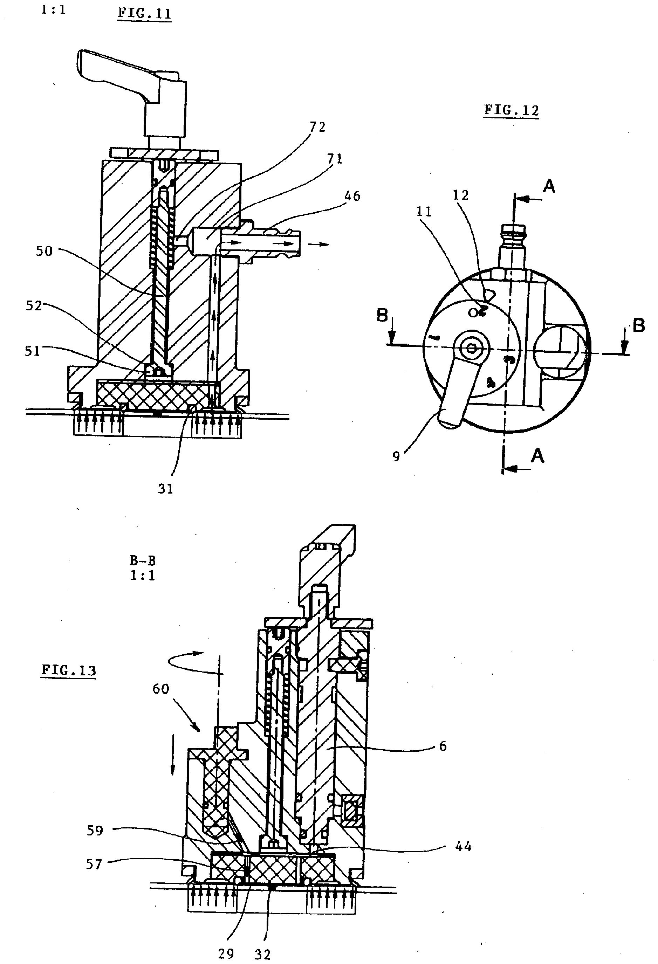

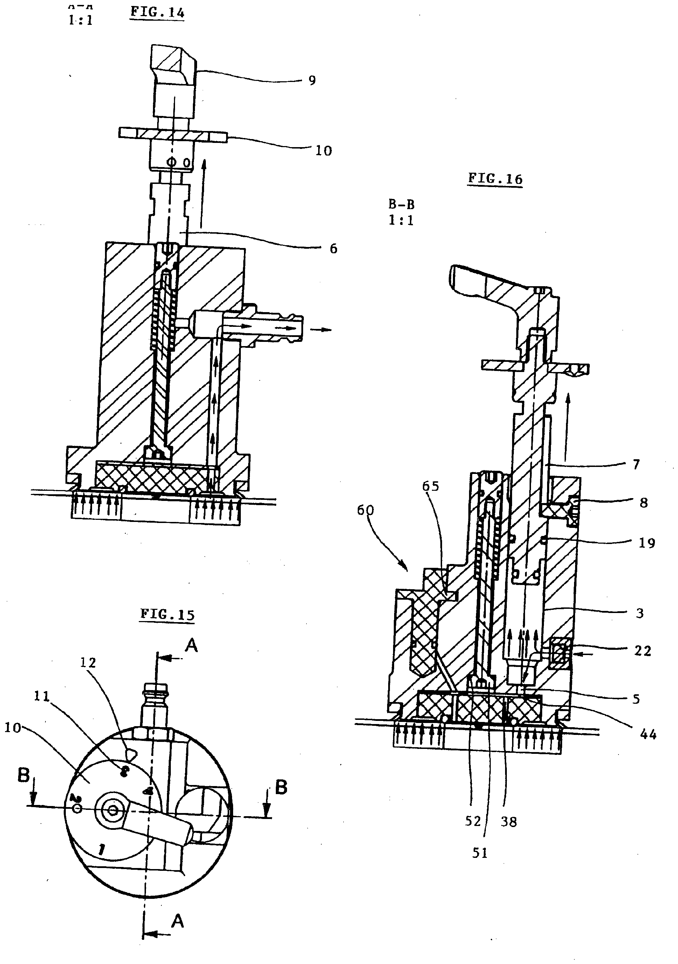

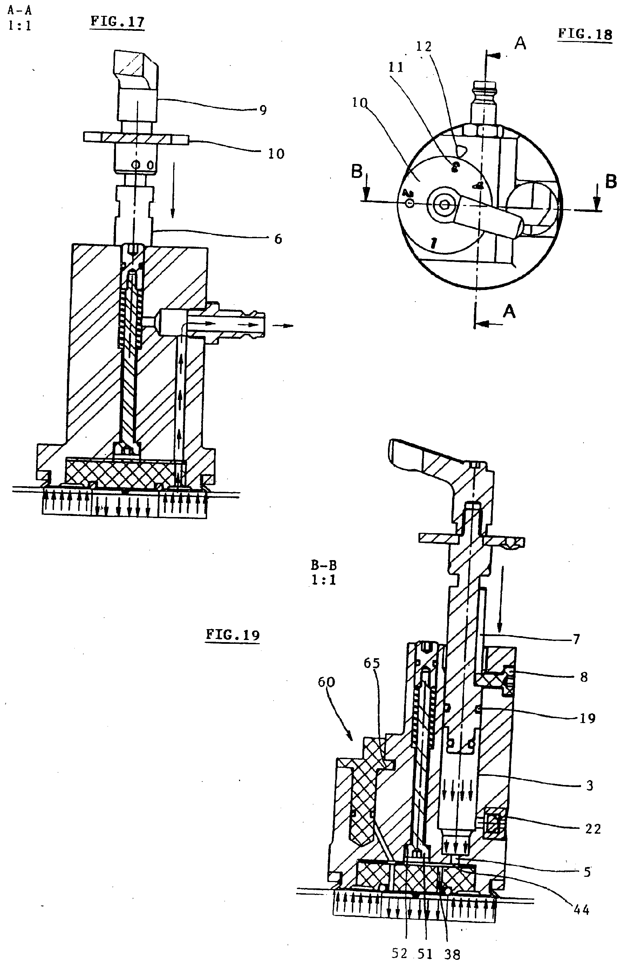

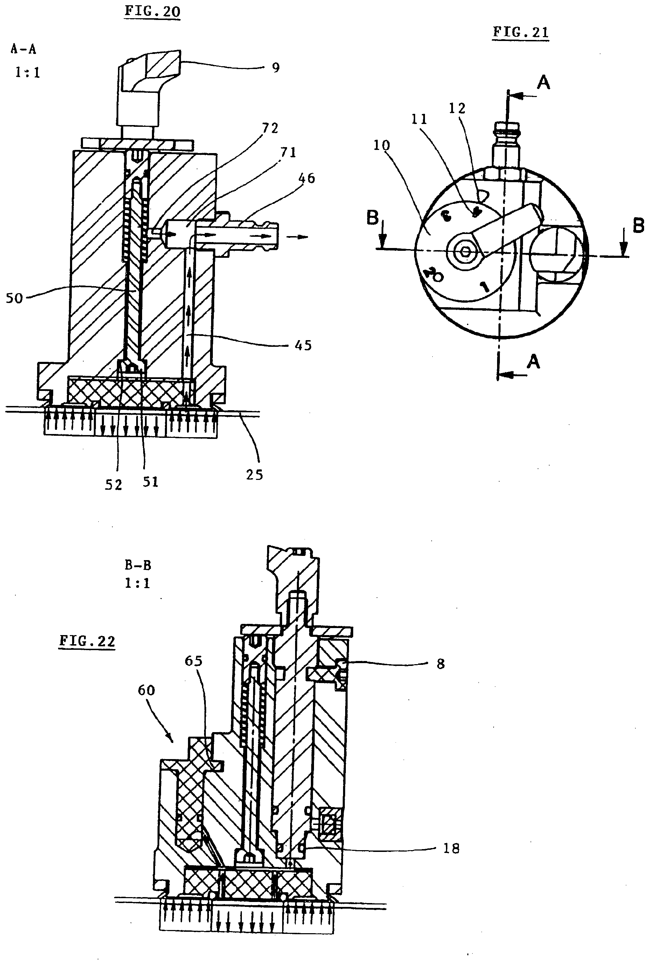

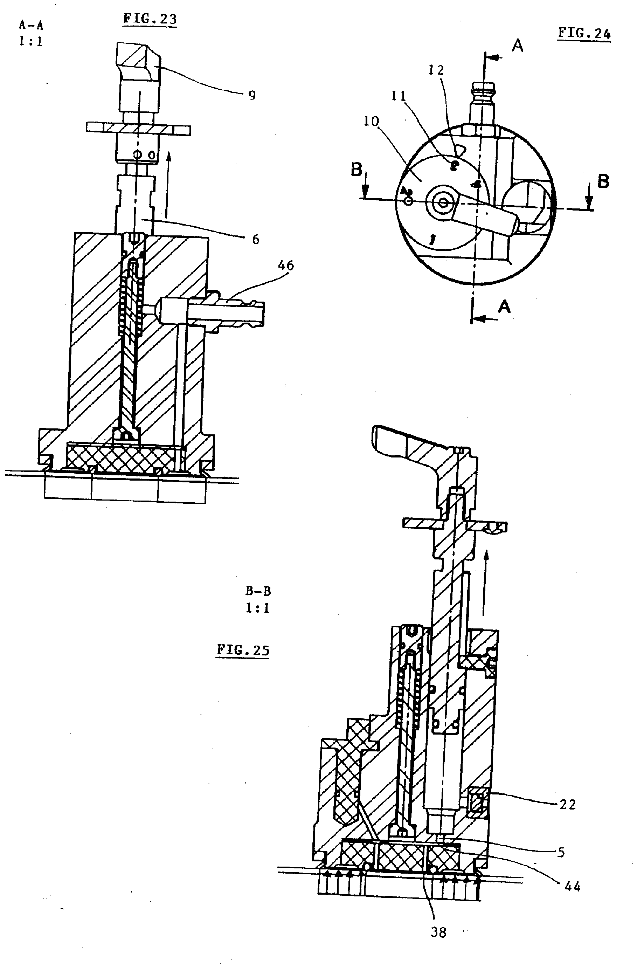

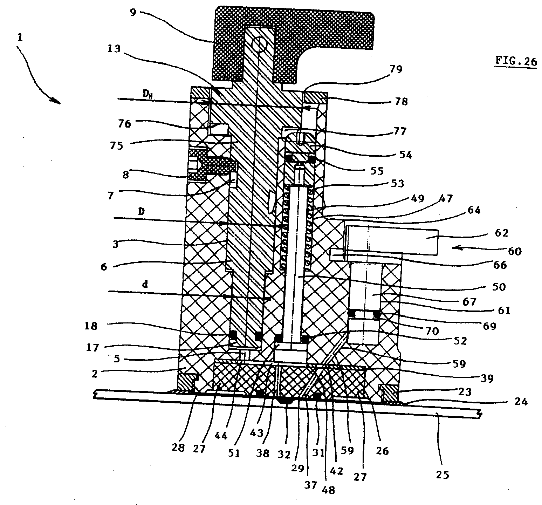

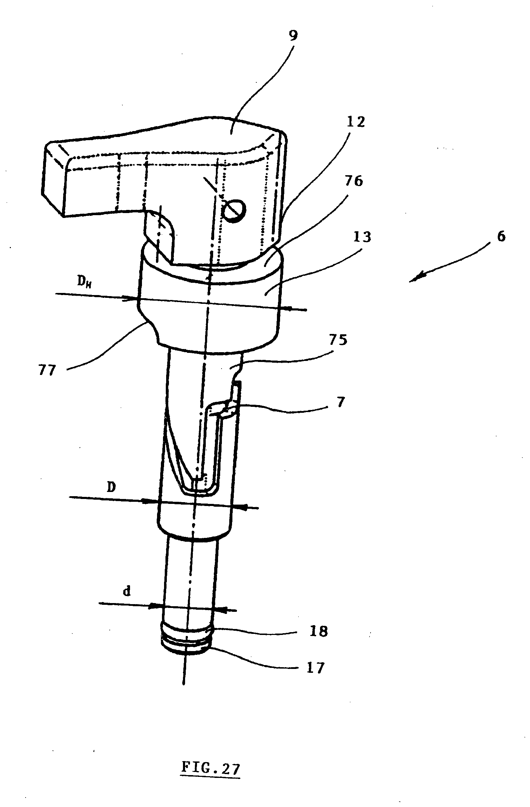

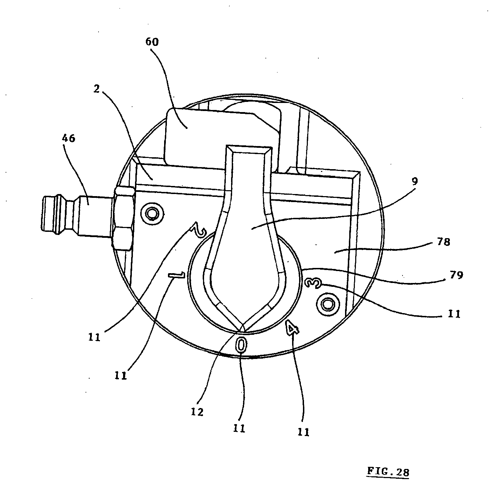

The invention will be described in detail in the following Figures, where Fig. 1 shows general view on the appliance according to this invention in exploded view, Fig. 2 shows general view to the swivelling adjustable piston, Fig. 3 presents a view of the positioning head of the swivelling adjustable piston, Fig. 4 presents a view of the appliance according to this invention in B-B plane identified on Fig. 9, Fig. 5 and Fig. 6 and Fig. 7 show the appliance according to this invention in home work position, Fig. 8, Fig. 9 and Fig. 10 show the appliance according to this invention in the first work position, Fig. 11, Fig. 12 and Fig. 13 show the appliance in the second work position, Fig. 14, Fig. 15 and Fig. 16 show the appliance in the third work position when lifting the swivelling adjustable piston up, Fig. 17, Fig. 18 and Fig. 19 show the appliance in the third work position when pulling the swivelling adjustable piston down, Fig. 20, Fig. 21, Fig. 22 show the appliance in the fourth work position and Fig. 23, Fig. 24 and 25 show the appliance during disassembly from glass, Fig. 26 shows a cross-section of the appliance without the suction valve, Fig. 27 shows a side view of the swivelling adjustable piston on the appliance without the suction valve, and Fig. 28 shows a view from above onto the appliance without the suction valve.

### Detailed description of the preferred embodiments

It is understood that specific embodiments of the invention described below are indicative only and do not in any way limit the embodiments of the invention to these specific shown here. The persons skilled in the art could find or derive under routine experimental procedures either higher or lower number of equivalents to specific embodiments of this invention being specially described here. These equivalents will be included in the scope of the following claims as well.

### Example 1

Fig. 1 shows general view on the appliance **1** according to this invention in exploded view for repairs of local damage to glasses **25.** The appliance **1** consists of either metal or plastic body **2** roughly of cylindrical shape, consisting of cylindrical borehole **3** for steel swivelling adjustable piston **6.** Close to orifices of the cylindrical borehole **3,** there is indicator **12** on the body **2** and in opposite direction to this, there are marks **11** rotating to indicate individual work positions of the swivelling adjustable piston 6.

Guiding pin **8** engaging in the interlock groove **7** for the swivelling adjustable piston **6** penetrates to the borehole wall **3** in the body **2.** The interlock groove **7** guides the piston **6** both during swivelling as well as vertical movement of the piston **6** that is possible in the third work position only.

The piston **6** has a flange **10** with handle **9** for simplified handling with the swivelling adjustable piston **6.** At the same time, the flange **10** is equipped with marks **11** for identification of the piston **6** work positions and pressing projection **73,** which is arranged just by the mark **11** symbolising the work position of the appliance **1** in which the overflow valve **49** is opened using the pressing projection **73** (see description below).

Detailed view of the swivelling adjustable piston **6** on Fig. 2 shows groove **20** for the sealing ring **18,** seating of front of the swivelling adjustable piston **6** and groove **21** for sealing ring **19** of the piston **6;** in addition, Fig. 2 shows the interlock groove **7** and the positioning head **13** with arresting pits **14** on its circumference to fix the work positions of the piston **6** with the arresting pin **15.** The arresting pin **15** is shown on Fig. 1 by the hole **16** that terminates to the borehole **3** in the body **2** and deployment of the arresting pits **14** along the circumference of the positioning head **13 of** the piston **6** is shown in detail on Fig. 3 that shows the section of the piston **6** in the area of the positioning head **13.**

The body **2** is fitted with one-way suction valve **22** on the body side (see Fig. 1) that is connected using the air supply channel **74** coming through the body **2** with the borehole **3** as shown on Fig. 4.

The other important components of the appliance 1 shown on Fig. 1 are the circumferential elastomer gaskets **24** arranged on the circumference of the base **23** of the body **2,** lid **27** of the body **2,** bolts **33** for affixing of the lid **27,** the gasket of the repair compartment **31,** the overflow valve **49** and the flat gasket **39.**

Arrangement of these components is shown on Fig. 4. The lid **27** of the body **2** is placed to the recess **26** of the base **23** of the body 2 and connected to the body **2** with bolts **33.** The flat gasket **39** is inserted between the lid **27** and the recess bottom **26.**

When placing the appliance **1** on the place of damage **32** of glass **25,** the fixing compartment **28** and repair compartment **29** are created and they are visible on Fig. 4. The fixing compartment **28** has circle ring shape, defined on external circumference with elastomer gasket **24** and on internal circumference with gasket **31** of the repair compartment **29.** The repair compartment **29** has circle shape defined by the gasket **31** that forms O-ring.

The repair compartment **29** and fixing compartment **28** are separated each other by vacuum as soon as the appliance **1** is pushed on glass **25** above the place of defect **32.**

The lid **27** of the body **2** is equipped with groove 30 on the lower side for O-ring forming the gasket **31** of the repair compartment **29** as well as the distribution channel **34** for the underpressure distribution in the fixing compartment **28** that projects up to the recess edge **26.** The lid **27** is fitted with the borehole **35** for underpressure supply to the fixing compartment **28,** holes **36** for bolts **33,** borehole **37** for glue supply **58** and borehole **38** for underpressure/pressure supply to the repair compartment **29.** The boreholes **35, 37** and the holes **36** in the lid **27** are coaxial, which is favourable for the lid **27** production.

The flat gasket **39** is perforated with holes that correspond to the holes in the lid **27.** These are the holes **40** for bolts **33,** hole **41** for underpressure supply to the fixing compartment **28** and the hole **42 for** glue **58** supply that correspond to the holes and boreholes **35, 36,** and **37 in** the lid **27** of the body **2,** as well as flat gasket **39** fitted with the hole **43** for underpressure/pressure supply to the repair compartment **29**, whereas the hole **43** is expanded to side by shape groove **44.** The shape groove **44** in the flat gasket **39** allows easily to guide underpressure and pressure to the repair compartment **29** as described below.

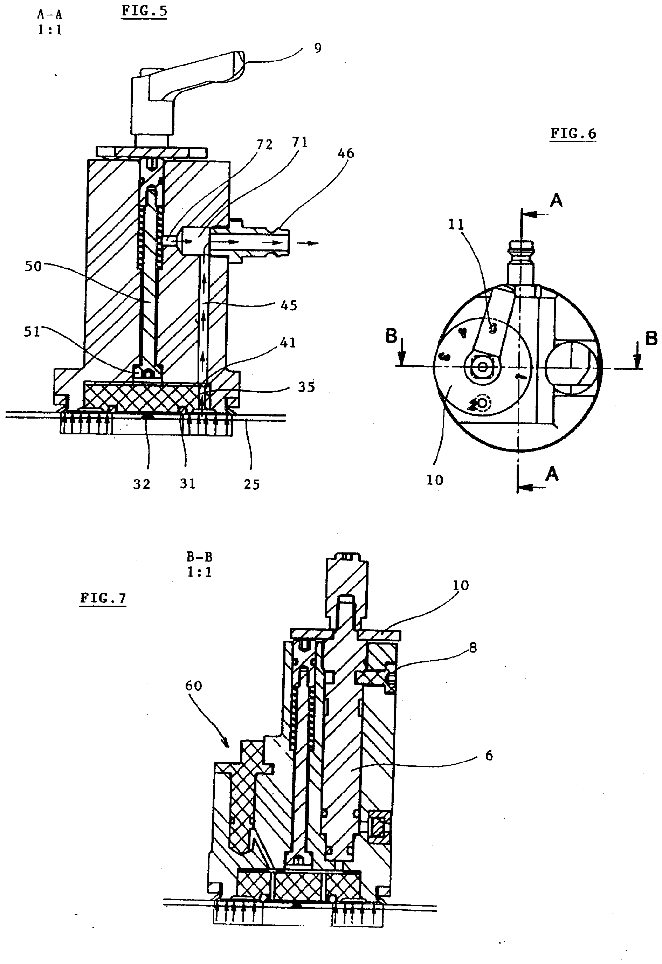

The body **2** of the appliance **1** has channel **45** for underpressure supply to the fixing compartment **28** (see Fig. 5) that terminates to the borehole **71** for the connector **46** for connection of the air pump (not shown here). From the borehole **71** and through the body 2, the connection channel **72** is guided to the borehole **47** for the overflow valve **49.** The seat **48** of the overflow valve **49 is** located in the body **2** in the compartment above the recess **26 of** the body base **2.** As soon as the air pump (not shown here) is started, the underpressure is generated in the channel **45** and in the borehole **47** for the overflow valve **49.**

Assembly of the overflow valve **49** on Fig. 1 comprises of the stem **50** of the overflow valve **49,** closing member **51** with the gasket **52** of the overflow valve **49,** spring **53** and pushing closure **54** of the overflow valve **49** with the gasket **55** of the closure **54.** The pushing closure **54** of the overflow valve **49** is fitted with internal hexagon **56** as well as the closing member **51** in order to disassemble the assembly of the overflow valve **49.**

Another important part of the appliance **1,** body **2** shown on Fig. 1 is the borehole **61** for the valve **60** for glue supply **58,** including visible arresting projection 64. Fig. 4, the borehole **61** for the valve **60** for glue supply **58** is terminated by the glue **58** bin **57**. From the bin **57,** there is a slanted channel **59** for glue supply **58** through flat gasket **39** to the borehole **37** in the lid **27** of the body **2.** The channel **59** terminates in the borehole **61** above the glue **58** level in the bin **57.**

The valve **60** of glue supply **58** on Fig. 1 and 4 has stem **67,** which is on one side terminated with a shape corresponding to the borehole **61** end shape and the bin **57** of glue **58,** whereas the side wall of the stem **67** is fitted with groove **70** for overflowing of glue **58** from the bin **57** to the channel **59** in the body **2** for glue supply **58** to the repair compartment **29.** On the other hand, the stem **67** of the valve **60** of glue supply **58** is fitted with head **62** that works as the arresting stop block **63,** engaged in the arresting projection **64** of the body **2.** Furthermore, the head **62** is fitted with arresting safety pin **65** that engages to the recess **66** in the body **2** under the arresting projection **64** for the safety pin **65** in case of swivelling the valve **60** of glue supply **58.** Tightness of the valve **60** of glue supply **58** is provided by the gasket **69** engaged in the groove **68** on the stem **67.**

The appliance **1** for repair of local damage to glass **25** according to embodiment of the invention works in fire work positions of the swivelling adjustable piston **6** being identified by position of the marks **11** on the flange **10** against the indicator **12** on the body **2** of the appliance **1** as well as vertical position, i.e. lifting up or pressing down the piston **6.** Individual work positions of the appliance **1** will be described in detail below:

| | |
|---|---|
| Home (zero) work position | - fixing of the appliance 1 on glass **25** and pouring of glue **58** to the bin **57** |
| First work position | - creating of underpressure in the repair compartment **29** and above glue **58** |
| Second work position | - squeezing of glue **58** to the repair compartment **29** |

| | |
|---|---|
| Third work position | - first phase - removal of underpressure in the repair compartment **29** |
| | - second phase - developing of pressure on glue **58** in the repair compartment **29** |
| Fourth work position | - flowing of glue **58** to break point **32** |
| Fifth work position | - disassembly of appliance **1** from the glass **25** |

In the home working position shown on Fig. 5, Fig. 6 and Fig. 7 the air pump (not shown here) is connected to the appliance **1** via the connector **46,** the swivelling adjustable piston 6 is set by the handle **9** to home work position indicated by mark **11** and indicator **12** (not visible in this piston **6** position because they are hidden by the handle **9**), the valve **60** for glue supply is left arrested in its borehole **61** and the appliance **1** is placed on glass **25 so** that the repair compartment **29** is located above break point **32** of glass **25.** The overflow valve **49** is closed.

After placing the appliance **1** above break point **32** of glass **25,** the air pump is turned on and the developed underpressure is spread by the connector **46** for connection of the air pump to the borehole **71** from where underpressure is distributed around the stem **50** to closed closing member **51** of the overflow valve **49,** therefore the overflow valve **49** is air-sealed by pressure of the closing member **51** via the stem **52** to the seat **48** and no underpressure is furthermore distributed. However, underpressure is distributed via the supply channel **45** through hole **41** in the flat gasket **39** and hole **35** in the lid **27** of the body **2** to the fixing compartment **28 in** the circular ring between the circumferential elastomer gasket **24** and gasket **31,** which makes the appliance 1 fixed on the repaired glass **25.**

The valve **60** of glue supply **58** is removed from the borehole **61** and the bin **57** is filled with loose liquid glue **58** in quantity required for repair. It is important that the glue **58** level in the bin **57** is lower than the channel orifice **59.** After pouring of the glue **58** to the bin **57,** the valve **60** is inserted to the borehole **61,** arrested by arresting stop block **63** on the arresting projection **64** of the body.

In alternative procedure for glue **58** filling in the bin **57,** the appliance **1** is stood upright on an absorbent pad to dose the glue **58 to** the bin **57** yet before fixing on the glass **25** in the home work position. The valve **60** for glue **58** supply is inserted in the borehole **61** and arrested in the arresting pin **64** by the arresting stop block **63.** Inserting of the valve **60** to the borehole .**61** squeezes excessive glue **58** from the bin **57** and the glue **58** evacuates the appliance **1** through the channel **59** via lid **27 by** the borehole **37** for glue supply **58** to the absorbent pad and in this way, correct glue **58** quantity is calibrated yet before affixing the appliance **1** in the home work position.

The air pump, being continuously enabled throughout the term of the glass **25** repair, keeps the underpressure in the fixing compartment **28,** borehole **71** for the connector **46** of the air pump, connecting channel **72** and in the borehole **47** for the overflow valve **49.**

The first work position is shown on Fig. 8, Fig. 9 and Fig. 10. It is set so that the appliance **1** operator changes the swivelling position of the piston **6** by the swivelling handle **9** in correct direction according to mark **11** and indicator **12,** i.e. the mark **11** of the first work position faces to the indicator **12.**

When swivelling of the adjustable piston **6** to the first work position, the pushing closure **54** of the overflow valve **49** is pressed by the pressing projection **73** located on the flange **10** of the piston 6, which causes opening of the overflow valve **49.** The underpressure is distributed by the hole **43** in the flat gasket **39** and through the borehole **38** via the lid **27** of the body **2** to the repair compartment **29** including damage cracks **32** of the glass **25** and at the same time, air is removed from the bin **57** above the glue **58,** including the channel **59** and hole **42** for glue **58** supply without pushing in the valve **60** of the glue **58** supply by underpressure to the borehole **61** because it is secured by the arresting stop **block** 63 and the arresting pin **64.**

In the second working position shown on Fig. 11, 12, and 13, swivelling of the adjustable piston **6** to the second working position according to the mark **11** against the indicator **12,** the overflow valve **49** closes because the pressing projection **73** of the flange **10** changes its position out of the pushing closure **54** and the closing member **51** of the overflow valve **49** again sits in the seat **48** in the body **2.** The underpressure present will force to the overflow valve **49** in closing direction and tightness of the overflow valve **49** will further increase because the underpressure forces on the closure of the closing member **51** in addition to the spring **53.**

In addition, the valve **60** for the glue **58** supply is manually swivelled in the second work position and the valve **60** engages in the borehole **61** in the body **2,** whereas the valve **60** is pulled into also by the underpressure via the channel **59** and it is secured by the arresting safety pin **65** in the recess **66** for said safety pin **65.** As soon as the valve **60** drives to the borehole **61, the** glue **58** - due to its incompressibility - is forced to escape from the bin **57** of the glue **58** through the groove **70** along the stem **67** and then via the channel **59** for supply to the repair compartment **29** via hole **42** in the flat gasket **39** and via the borehole **37** in the lid **27** of the body **2** to the repair compartment **29** where the glue **58** is poured on the break point **32** of the glass **25**. Due to presence of the underpressure, a small portion of the glue **58** is stuck after pouring to the repair compartment **29** to the borehole **38** for the underpressure/pressure supply to the repair compartment **29** from where the glue **58** is subsequently squeezed to the break point **32** of the glass **25 by** the piston pressure **6** in the next work position. It is favourable if the borehole **37** for glue supply and the borehole **38** for underpressure/pressure supply in the lid **27** are arranged in the opposite sections of the repair compartment **29** so that as least as possible glue **58** is stuck to the borehole **38** for the underpressure/pressure supply by the present underpressure.

In the third work position, where the mark **11** of the third work position turns against the indicator **12,** the swivelling adjustable piston **6** becomes able to move vertically because the guiding pin **8** stops hindering that movement thanks to the position of the interlock groove **7** on the piston **6**. The third work position is divided into the telescopic position identified as the first phase, shown on Fig. 14, Fig. 15 and Fig. 16 and the piston pressing position identified as the second phase, shown on Fig. 17, Fig. 18 and Fig. 19.

In the first phase of the third work position, when pulling the piston **6** out, air is delivered by one-way suction valve **22** to the cylindrical borehole **3** in the body **2** and at the same time, the delivered air fills the shape groove **44** with hole **43 via** the channel **5** for pressure supply in the flat grease **39** and through the borehole **38** in the lid **27** of the body **2,** air gets up to the repair compartment **29** above flowing glue **58 to** the break point **32** of glass **25.**

In the second phase of third work position, the piston **6** is compressed and during compression, the pressure acts from downside to the closing member **51** of the overflow valve **49** and to the glue **58** in the repair compartment **29.** Because pressure acts in closing direction in this position to the closing member **51** of the overflow valve **49,** this phase does not cause any pressure or underpressure drop across the appliance **1** due to leaks of the overflow valve **49** and the constant air pressure presses the glue **58** successively to all break points **32** of the glass **25** without either pulling in or pushing out the glue **58** elsewhere. If needed, the vertical movement of the piston **6** can be repeated several times in order to achieve sufficient pressure in the repair compartment **29.**

During the fourth work position shown on Fig. 20, Fig. 21 and Fig. 22, the mark **11** of the fourth work position is set against the indicator **12** by swivelling the piston **6** by 45°, which makes the piston **6** secured only against vertical movement by the guiding pin **8** and the operator waits until proper pushing of the glue **58** to all cracks and the extreme areas of the break point **32** of the glass **25.** In this way, the pressure acts constantly for time required.

In the fifth working position shown on Fig. 23, Fig. 24 and Fig. 25, the piston **6** returns to the third work position identified by the mark **11** when directing to the indicator **12**, i.e. in fact back to the third work position and due to existing pressure, the piston **6** pulls out and the pressure present in the repair compartment **29** developed by previous pushing of the piston **6** is reduced to minimum. The air pump is turned off, the underpressure from the fixing compartment **28** is removed and the appliance **1** is removed from the repaired glass **25.** The piston **6** returns into home work position and the appliance **1** is ready for use again.

### Example 2

Fig. 26 shows a cross-section of the appliance **1** for repairing damage **32** to layered glass **25.** Part of the appliance **1** is a steel swivelling adjustable piston **6,** which is set into a cylindrical borehole **3** in a plastic body **2** of the appliance **1**. The borehole **3** in the site of the seating **17** of the front of the piston **6** at diameter **d** with a size of 10 mm and in the site of the upper seating **75** has a diameter **D** with a size of 18 mm. The swivelling adjustable piston **6** controls the function of the appliance **1** so that in each working position it allows the operator of the appliance **1** to carry out only one technological step. This is achieved by machining an interlock groove **7** in the body of the adjustable piston **6,** through which runs the guiding pin **8.** If the operator of the appliance **1** wants to manipulate with the adjustable piston **6** other than a way permitted by the current technological step, the guiding pin **8** makes such a movement impossible.

Another function of controlling the swivelling piston **6** lies in the pushing control of the valve device, created by an overflow valve **49** which is set into a borehole **47** drilled into the body **2** next to the borehole **3.** The borehole **47** has two distinct diameters. The upper half of the borehole **47** has a wider diameter for holding a spring **53.** The overflow valve **49** consists of a closing member **51** abut against the sealing rubber washer **52** located in the seat **48,** which is fixed to the body **2** in the lower part of the borehole **47.** The closing member **51** is connected by steel valve stem **50** with pushing closure **54,** which has a larger diameter than the valve stem **50.** The seat **48 with** sealing washer **52** is created at the end of the borehole **47,** while the pushing closure **54** of the overflow valve **49** is stored in a wider upper borehole **47** and the stem **50** passes through the entire borehole **47**. Between the pushing closure **54** and transition from the upper wider half of the borehole **47** on the narrower part of the borehole **47** there is a spring **53** stored. The bottom end of the spring **53** is pressed against the body **2** in the borehole **47** while the upper end is pressed against the lower side of the pushing closure **54,** so that the force of the spring **53** closes the valve device at the site of the seat **48** and the sealing washer **52.**

When working with the appliance **1** the overflow valve **49** is pushed into the borehole **47**, or is contrarily released depending on the current technological step in which the appliance **1** is found. This is achieved in that above the upper seating **75** of the adjusting piston **6** there is a machined positioning head **13** with diameter **D_{H}** and size 26 mm, which is an integral part of the adjustable piston **6** and is distinct from the adjustable piston **6** by a larger diameter, which is evident when looking at the formed overlap **76.** The overlap **76** of the positioning head **13** reaches beyond the pushing closure **54.** So that the overlap **76** does not exert continuous pressure on the pushing closure **54,** there is an overlap recess **77** on the overlap **76**, which has a changing depth with the corresponding position of the swivelling adjustable piston **6** in various technological steps, so that the overflow valve **49** is pushed by the positioning head **13** only in certain positions of the adjustable piston **6,** when it is necessary to open the valve device with pressure and create a vacuum at the site above the damage **32** to the glass **25.** In other positions of the swivelling adjustable piston **6** the overflow valve **49** is closed by a spring **53.**

The interlock groove **7,** as shown in Fig. 27 which shows a side view of the adjustable piston **6,** and which enables manipulation with the adjustable piston **6** only in one movement because other movements are blocked by the guiding pin **8** screwed into the body **2,** which is blocked from movement by the remaining non-machined cladding of the adjustable piston **6.**

On the seating **17** of the front of the adjustable piston **6** there is a recess created with rubber sealing ring **18** in the shape of an O-ring. The sealing **18** prevents the passage of air, so the adjustable piston **6** is air-tight in its lowest position. In the event that the adjustable piston **6** is pulled out in a certain technological step, air is drawn in below the adjustable piston **6,** since the sealing **18** moves to the wider part of the borehole **3.** When the adjustable piston **6** is pressed back to its lowest position, the air is captured in the narrower part of the borehole **3,** where increased pressure is created.

So that the operator of the appliance **1** knows exactly at which technological step the appliance **1** is found, and so that the appliance **1** is protected from dirt, the body **2** on the upper side is equipped with a plastic upper cover **78,** into which a hole **79** is drilled for the free passage of the positioning head **13.** On the cover **78** there are numbers stamped which serve as marks **11** for identifying the technological step of the adjustable piston **6.** These marks **11** are indicated by the indicator **12** made up of the pointed end of the aluminium handle **9 of** the piston **6,** which is screwed to the positioning head **13.**

Fig. 26 also shows the borehole **61** for the valve **60** for the supply of glue **58,** on the bottom of which is carried out the storage of the dosage of glue **58** for repairing damage **32** to layered glass **25.** The borehole **61** has a flat bottom, so that the glue **58** does not get stuck inside. From the borehole **61** in the side wall above its bottom there is a channel **59** drilled for release of the pressurized glue **58** for the damaged **32** glass **25.** The channel **59** passes through the body **2** of the appliance **1,** including the lid **27 of** the body **2**. The glue **58 is** pressed out of the borehole **61** through the valve **60.**

The appliance **1** functions throughout the individual technological steps as follows:
Step 0:
   The appliance **1** is placed concentrically on the site of the damaged **32** glass **25.** It is connected to an air-pump (not pictured) through a connector **46,** which, when turned on, begins to create a vacuum through the distribution channel **34** for creating a vacuum beneath the lid **27** into the fixing compartment **28.** The necessary dose of glue **58** is applied into the borehole **61** and the valve **60** is inserted, which is secured in a retracted and rotated position above the dose of glue **58** for repairing damaged **32** glass **25** by the arresting projection **64** created on the body **2.**
Step 1:
   The appliance **1** is now firmly attached, so the operator may now turn the adjustable piston **6** to technological step 1, resulting in pressure on the overflow valve **49** by the positioning head **13** and in opening the closing member **51** from the sealing **52.** The vacuum spreads into the repair compartment **29,** including all microscopic cracks in the glass **25** in the damaged area **32** and through the channel **59** and above the surface of the dose of glue **58** stored in the borehole **61,** covered by the retracted, rotated, and arrested valve **60.**
Step 2:
   By rotating the adjustable piston **6,** including the positional head **13,** the overflow valve **49** closes, and above the site of the damaged **32** glass **25** an isolated vacuum forms. The operator of the appliance **1** rotates, thus releasing the valve **60** from the arrested projection **64,** which is pulled into the borehole **61** by the created vacuum and presses on the surface of the dose of glue **58,** which moves through the channel **59** into the repair compartment **29** of the damaged **32** glass **25,** where it flows for approximately one minute. The valve **60** in its retracted position is rotated to secure it into the safety pin recess **66.** The vacuum in the microscopic cracks results in the glue **58** having an increased flow.
Step 3:
   In this position of the adjustable piston **6** the interlock groove **7** with guiding pin **8** allows for the movement of the adjustable piston **6** along the vertical axis. The overflow valve **49** is closed; the valve **60** is completely retracted into the borehole **61** and is constantly arrested. By pulling out the adjustable piston **6** to its highest position, the operator removes the vacuum above the damaged **32** glass **25 with** flowing glue **58,** since the adjustable piston **6** in its highest position is not sealed, because the borehole **3** is wider in its central part than the front seating **17** of the adjustable piston **6** with set sealing **18.** After the air is taken in, the operator presses to return the adjustable piston **6** to its lowest position, which not only begins to seal again, but also increases the pressure above the damaged **32** glass **25.** The rotationally adjustable piston **6** is rotated under pressure into technological step 4, where it is secured against ejection by the increased pressure. The increased pressure acts on the glue **58** in the damaged area **32** of the glass **25** and the glue **58** thus flows into the most distant cracks where it normally would not flow e.g. under the capillary action of liquids. The increased pressure is left to work for at least 2 minutes.
Step 4:
   The adjustable piston **6** is returned to technological step 3, and pulling it out returns the increased vacuum to the value of the local atmospheric pressure, then the air-pump attachment is disconnected and the appliance **1** is removed from the glass.

After completion of repair, the lid **27** of the appliance **1** is wiped to remove stuck drops of glue **58,** the glue supply valve **60** is ejected, and the adjustable piston **6** is returned to position 0, at which point the appliance **1** is ready for repeated use.

### Industrial applicability

The appliance according to this invention can be mainly used for repairs of local damage to laminated glasses, particularly windscreens of cars and of other transportation means, where surface is chipped off on a small surface area due to collision with small things such as small stones.

### Overview of the positions used in the drawings

- 1: appliance for repairs of local damage of glass
- 2: body
- 3: cylindrical borehole for swivelling adjustable piston
- 4: seating of cylindrical borehole
- 5: channel for pressure supply to repair compartment
- 6: swivelling adjustable piston
- 7: interlock groove for positioning of piston
- 8: guiding pin of interlock groove
- 9: piston handle
- 10: flange
- 11: mark
- 12: indicator
- 13: positioning head
- 14: arresting pit
- 15: arresting pin
- 16: hole for arresting pin
- 17: seating of piston front
- 18: sealing ring for seating of piston front
- 19: piston sealing ring
- 20: groove for sealing ring for seating of piston front
- 21: groove for piston sealing ring
- 22: one-way suction valve
- 23: body base
- 24: circumferential elastomer gasket
- 25: glass
- 26: body base recess
- 27: body lid
- 28: fixing compartment
- 29: repair compartment
- 30: groove for repair compartment gasket
- 31: repair compartment gasket
- 32: damage
- 33: bolt
- 34: distribution channel for underpressure distribution in fixing compartment
- 35: borehole for underpressure supply to fixing compartment
- 36: bolt hole
- 37: borehole for glue supply
- 38: borehole for underpressure/pressure supply to repair compartment
- 39: flat grease
- 40: bolt hole
- 41: underpressure supply hole to fixing compartment
- 42: hole for glue supply
- 43: underpressure supply hole to repair compartment
- 44: shape groove
- 45: channel in body for underpressure supply to fixing compartment
- 46: air pump connector
- 47: borehole for overflow valve
- 48: seat for overflow valve
- 49: overflow valve
- 50: overflow valve stem
- 51: closing member of overflow valve
- 52: sealing of closing member of overflow valve
- 53: overflow valve spring
- 54: pushing closure of overflow valve
- 55: closure gasket of overflow valve
- 56: inner hexagon
- 57: glue bin
- 58: glue
- 59: channel in body for glue supply to repair compartment
- 60: glue supply valve
- 61: borehole for glue supply valve
- 62: glue supply valve head
- 63: arresting stop block of glue supply valve
- 64: arresting projection of body
- 65: arresting safety pin of glue supply valve
- 66: recess for safety pin
- 67: glue supply valve stem
- 68: glue supply valve stem gasket groove
- 69: glue supply valve stem gasket
- 70: groove for overflowing of glue from bin to channel
- 71: borehole for air pump connector
- 72: connecting channel
- 73: pressing projection of flange of swivelling adjustable piston
- 74: air supply channel
- 75: upper seating of the piston
- 76: overlap
- 77: overlap recess
- 78: upper cover
- 79: hole in the cover

- d: diameter of the piston in lower seating
- D: diameter of the piston in upper seating
- D_{H}: diameter of the positioning head

## Claims

1. The appliance (1) for repairs of local damage (32) of laminated glasses (25), particularly glasses (25) of cars and other transportation means, consisting of a body (2) with a body base (23) fitted with circumferential elastomer gasket (24) defining a fixing compartment (28) and mountable to glass (25) using underpressure from an air pump delivered to the fixing compartment (28), whereas in the body base (23) area there is also a gasket (31) of a repair compartment (29), which separates the repair compartment (29) located above the break point (32) of glass (25) from the fixing compartment (28), where the repair compartment (29) is connected to the channel (59) in the body (2) for the glue supply (58) to the repair compartment (29), and the appliance (1) furthermore includes a valve device for underpressure supply to the repair compartment (29) and the swivelling adjustable piston (6) placed in the cylindrical borehole (3) in the body (2) for controlling of individual work positions of the appliance (1) and development of pressure in the repair compartment (29), **characterized in that** the body base (23) of the body (2) has a recess (26) where there is a removable lid (27) with the gasket (31) of the repair compartment (29); in the lid (27) there is a borehole (38) for supplying the underpressure to the repair compartment (29); the valve device consists of an overflow valve (49) installed in the body (2), terminated to the recess (26), fitted with a control arranged outside the body (2) and connecting the borehole (38) of the lid (27) with the connector (46) for connection of an air pump, where the connection is guided outside the borehole (3) space of the swivelling adjustable piston (6), wherein a closing member (51) of the overflow valve (49) is arranged so that when closing the overflow valve (49), it moves in underpressure suction direction from the repair compartment (29) to the connector (46) for the air pump connection and the fixing compartment (28) is connected with connector (46) for the air pump connection via the borehole (35) created independently in the lid (27) and connecting the fixing compartment (28) with the channel (45) for underpressure supply to the fixing compartment (28), guided in the body (2) outside the overflow valve (49) to the connector (46) for connection of the air pump, and the appliance (1) furthermore contains device for air supply to the borehole space (3) under the swivelling adjustable piston (6).

2. The appliance according to claim 1, **characterized in that** the borehole (38) is furthermore connected with the channel (5) for pressure supply to the repair compartment (29), developed in the body (2) between the recess front (26) and circular borehole (3) for the swivelling adjustable piston (6).

3. The appliance according to claim 2, **characterized in that** in the recess (26) there is between the lid (27) and the base front (23) a flat gasket (39) with a hole (43) for underpressure supply to the repair compartment (29), arranged under the termination of the overflow valve (49) to the recess (26) and fitted with a shape groove (44) protruding above the borehole (38) orifice in the lid (27) and under the channel (5) orifice in the recess front (26).

4. The appliance according to claim 3, **characterized in that** the flat gasket (39) is fitted with a hole (41) for underpressure supply to the fixing compartment (28) that connects the borehole (35) in the lid (27) with the channel (45) in the body (2).

5. The appliance according to claim 3 or 4, **characterized in that** in the lid (27) there is the borehole (37) for glue supply (58) to the repair compartment (29) and the flat gasket (39) has a hole (42) for the glue supply (58) that connects the borehole (37) with the channel (59) in the body (2).

6. The appliance according to claim 1, **characterized in that** the device for air supply to the borehole space (3) under the piston (6) is formed so that the cylindrical borehole (3) for the swivelling adjustable piston (6) is in its lower part connected to the one-way suction valve (22) installed in the body (2) for air suction under the piston (6) and replacement of underpressure in the repair compartment (29) with pressure.

## Patentansprüche

1. Vorrichtung (1) zum Reparieren lokaler Beschädigungen (32) von Verbundglasscheiben (25), insbesondere von Verbundglasscheiben (25) von Kraftfahrzeugen und anderen Transportmitteln, bestehend aus einem Körper (2) mit einer Körperbasis (23), die mit einer umlaufenden Elastomerdichtung (24) versehen ist, die ein Befestigungsraum (28) definiert und an der Verbundglasscheibe (25) mit Hilfe von Unterdruck aus einer Luftpumpe, der in das Befestigungsraum (28) geleitet wird, befestigt werden kann, wobei im Bereich der Körperbasis (23) auch eine Dichtung (31) eines Reparaturraumes (29) vorhanden ist, die das oberhalb der Beschädigung (32) der Glasscheibe (25) befindliche Reparaturraum (29) von dem Befestigungsraum (28) trennt, wobei der Reparaturraum (29) mit dem Kanal (59) im Körper (2) für die Leimzufuhr (58) zum Reparaturraum (29) verbunden ist und die Vorrichtung (1) außerdem eine Ventilvorrichtung für die Unterdruckzufuhr zum Reparaturraum (29) und den schwenkbaren, einstellbaren Kolben (6), der in der zylindrischen Bohrung (3) im Körper (2) angeordnet ist, zur Steuerung der einzelnen Arbeitspositionen des Geräts (1) und der Entwicklung des Drucks im Reparaturraum (29) umfasst, **dadurch gekennzeichnet, dass** die Körperbasis (23) des Körpers (2) eine Aussparung (26) aufweist, in der sich ein abnehmbarer Deckel (27) mit der Dichtung (31) des Reparaturraums (29) befindet; im Deckel (27) befindet sich eine Bohrung (38) für die Zufuhr des Unterdrucks zum Reparaturraum (29); die Ventilvorrichtung besteht aus einem im Körper (2) eingebauten Überströmventil (49), das an die Aussparung (26) anschließt, mit einer außerhalb des Körpers (2) angeordneten Steuerung versehen ist und die Bohrung (38) des Deckels (27) mit dem Anschluß (46) für eine Luftpumpe verbindet, wobei der Anschluß außerhalb der Bohrung (3) des schwenkbaren verstellbaren Kolbens (6) geführt ist, wobei ein Schließglied (51) des Überströmventils (49) so angeordnet ist, dass es sich beim Schließen des Überströmventils (49) in Unterdruck-Saugrichtung vom Reparaturraum (29) zum Anschluss (46) der Luftpumpe bewegt und der Befestigungsraum (28) mit dem Anschluss (46) der Luftpumpe über die selbständig im Deckel (27) geschaffene und den Befestigungsraum (28) mit dem Kanal (45) zur Unterdruckversorgung des Befestigungsraum (28) verbindende Bohrung (35) verbunden ist, im Körper (2) außerhalb des Überströmventils (49) zum Anschluss (46) für die Luftpumpe geführt wird, und die Vorrichtung (1) weiterhin eine Vorrichtung zur Luftzufuhr in die Bohrung (3) unter dem schwenkbaren verstellbaren Kolben (6) enthält.

2. Vorrichtung nach Anspruch 1, **dadurch gekennzeichnet, dass** die Bohrung (38) ferner mit dem Kanal (5) zur Druckversorgung des Reparaturraums (29) verbunden ist, der im Körper (2) zwischen der vorderen Aussparung (26) und der zylindrischen Bohrung (3) für den schwenkbaren verstellbaren Kolben (6) ausgebildet ist.

3. Vorrichtung nach Anspruch 2, **dadurch gekennzeichnet, dass** sich in der Aussparung (26) zwischen dem Deckel (27) und der Front der Körperbasis (23) eine Flachdichtung (39) mit einem Loch (43) für die Unterdruckversorgung des Reparaturraums (29) befindet, die unter dem Abschluss des Überströmventils (49) zur Aussparung (26) angeordnet und mit einer Formrille (44) versehen ist, die über die Bohrung (38) im Deckel (27) und unter die Öffnung des Kanals (5) in der Front der Aussparung (26) ragt.

4. Vorrichtung nach Anspruch 3, **dadurch gekennzeichnet, dass** die Flachdichtung (39) mit einem Loch (41) für die Unterdruckversorgung des Befestigungsraums (28) versehen ist, die die Bohrung (35) im Deckel (27) mit dem Kanal (45) im Körper (2) verbindet.

5. Vorrichtung nach Anspruch 3 oder 4, **dadurch gekennzeichnet, dass** im Deckel (27) die Bohrung (37) für die Leimzufuhr (58) zum Reparaturraum (29) vorhanden ist und die Flachdichtung (39) ein Loch (42) für die Leimzufuhr (58) aufweist, das die Bohrung (37) mit dem Kanal (59) im Körper (2) verbindet.

6. Vorrichtung nach Anspruch 1, **dadurch gekennzeichnet, dass** die Vorrichtung zur Luftzufuhr in den Raum der Bohrung (3) unter dem Kolben (6) so ausgebildet ist, dass die zylindrische Bohrung (3) für den schwenkbaren, verstellbaren Kolben (6) in ihrem unteren Teil mit dem im Körper (2) eingebauten Einweg-Saugventil (22) zum Ansaugen von Luft unter dem Kolben (6) und Ersetzen von Unterdruck im Reparaturraum (29) durch Druck verbunden ist.

## Revendications

1. L'appareil (1) pour la réparation de points (32) de rupture de verres (25) feuilletés, en particulier de verres (25) de voitures et d'autres moyens de transport, consistant en un corps (2) avec une base (23) munie d'un joint (24) élastomère circonférentiel définissant un compartiment (28) de fixation et pouvant être monté sur le verre (25) en utilisant la sous-pression d'une pompe à air délivrée au compartiment (28) de fixation, et dans la zone de la base (23) se trouve un joint (31) d'un compartiment (29) de réparation, qui sépare le compartiment (29) de réparation situé au-dessus du point (32) de rupture du verre (25) du compartiment (28) de fixation, où le compartiment (29) de réparation est relié au canal (59) dans le corps (2) pour l'alimentation en colle (58) vers le compartiment (29) de réparation, et l'appareil (1) comprend en outre un dispositif de soupape pour l'alimentation en sous-pression vers le compartiment (29) de réparation et le piston (6) réglable pivotant placé dans un alésage (3) cylindrique dans le corps (2) pour contrôler les positions de travail individuelles de l'appareil (1) et le développement de la pression dans le compartiment (29) de réparation, **caractérisé en ce que** dans la base (23) du corps (2) se trouve un évidement (26) où se trouve un couvercle (27) amovible avec le joint (31) du compartiment (29) de réparation ; dans le couvercle (27) se trouve un alésage (38) pour fournir la sous-pression au compartiment (29) de réparation ; le dispositif de soupape se compose d'une soupape (49) de décharge installée dans le corps (2), terminée par l'évidement (26), équipée d'une commande disposée à l'extérieur du corps (2) et reliant l'alésage (38) du couvercle (27) au connecteur (46) pour le raccordement d'une pompe à air, où le raccordement est guidé à l'extérieur de l'espace d'alésage (3) du piston (6) réglable pivotant, dans lequel un élément (51) de fermeture de la soupape (49) de décharge est disposé de sorte que lors de la fermeture de la soupape (49) de décharge il se déplace dans le sens de l'aspiration de la dépression depuis le compartiment (29) de réparation vers le connecteur (46) pour le raccordement de la pompe à air et le compartiment (28) de fixation est relié au connecteur (46) pour le raccordement de la pompe à air via l'alésage (35) créé indépendamment dans le couvercle (27) et reliant le compartiment (28) de fixation au canal (45) pour l'alimentation en dépression du compartiment (28) de fixation, guidé dans le corps (2) à l'extérieur de la soupape (49) de décharge vers le connecteur (46) pour le raccordement de la pompe à air, et l'appareil (1) contient en outre un dispositif pour l'alimentation en air de l'espace de l'alésage (3) sous le piston (6) réglable pivotant.

2. Appareil selon revendication 1, **caractérisé en ce que** l'alésage (38) est en outre relié au canal (5) d'alimentation en pression du compartiment (29) de réparation, créé dans le corps (2) entre le front d'évidement (26) et l'alésage (3) cylindrique pour le piston (6) réglable pivotant.

3. Appareil selon revendication 2, **caractérisé en ce que** dans l'évidement (26) entre le couvercle (27) et le front de la base (23) se trouve un joint (39) plat avec un alésage (43) pour l'alimentation en dépression du compartiment (29) de réparation, disposé sous la terminaison de la soupape (49) de décharge vers l'évidement (26) et équipé d'une rainure (44) de forme débordant au-dessus de l'orifice de l'alésage (38) dans le couvercle (27) et sous l'orifice du canal (5) dans le front de l'évidement (26).

4. Appareil selon revendication 3, **caractérisé en ce que** le joint (39) plat est muni d'un alésage (41) pour l'alimentation en dépression du compartiment (28) de fixation qui relie l'alésage (35) du couvercle (27) avec le canal (45) du corps (2).

5. Appareil selon revendication 3 ou 4, **caractérisé en ce que** dans le couvercle (27) se trouve l'alésage (37) pour l'alimentation en colle (58) vers le compartiment (29) de réparation et le joint plat (39) a un alésage (42) pour l'alimentation en colle (58) qui relie l'alésage (37) avec le canal (59) dans le corps (2).

6. Appareil selon revendication 1, **caractérisé en ce que** le dispositif d'alimentation en air de l'espace de l'alésage (3) sous le piston (6) est réalisé de telle sorte que l'alésage (3) cylindrique pour le piston (6) réglable pivotant est relié dans sa partie inférieure à la soupape (22) d'aspiration unidirectionnelle installée dans le corps (2) pour l'aspiration de l'air sous le piston (6) et le remplacement de la dépression dans le compartiment (29) de réparation par la pression.
